# EUROPEAN PATENT SPECIFICATION

(11) **EP 2 498 616 B1**
(45) Date of publication and mention of the grant of the patent: **08.04.2015**
(21) Application number: 10834813.7
(22) Date of filing: 09.11.2010
(51) Int. Cl.: A22C 25/12, B65G 47/252

(54) **DEVICE FOR ORIENTATING FISH**
VORRICHTUNG ZUR AUSRICHTUNG VON FISCHEN
DISPOSITIF D'ORIENTATION DU POISSON

(30) Priority: 09.11.2009 NO 20093302
(43) Date of publication of application: 19.09.2012
(60) Divisional application: 14187608.6
(73) Proprietor: Skala Maskon AS, 7500 Stjördal (NO)
(72) Inventor: ANDRESEN, Halvard, N-7500 Stjördal (NO); HAMMEREN, Jon Egil, N-7630 Aasen (NO); OPPHEIM, Per Arne, N-7632 Aasenfjord (NO); VAAGLAND, Frode, N-7530 Meraaker (NO); KLEVEN, Haavard, N-7517 Hell (NO); ERIKSSON, John, N-7530 Meraaker (NO); HÄGGLUND, Jörgen, N-7520 Hegra (NO)
(74) Representative: Curo AS
(86) International application number: PCT/NO2010/000406
(87) International publication number: WO 2011/068413

(56) References cited:
- DE-A1-102007 041 167
- DE-A1-102007 041 167
- JP-A- 9 084 514
- SU-A1- 1 454 342
- SU-A1- 1 634 219
- US-A- 4 051 952
- US-A- 4 557 020
- US-A- 4 557 020
- US-A- 4 613 031
- US-A- 4 613 031
- US-A- 5 115 903
- US-A- 5 291 983

## Description

The present invention is related to the use of a device for automatic head/tail fin turning of fish, according to patent claim 1.

### Background

In the vast majority of plants for processing or handling fish, dead or alive, there is a need for orienting fish, both regarding abdomen/back and head/tail fin. Most of the systems for orienting fish require the fish to be supplied one by one, and this is usually performed in two separate systems, first singularizing and then turning. When the orientation of the fish has been given and the fish is supplied one by one, numerous handling and processing situations, which today is performed fully or partly manually, can be automated with a substantially increased speed and higher accuracy.

Both singularizing and orienting has been attempted in the past, but the systems have low speed and are large and expensive machines. US 5,115,903 discloses a system which utilizes optical solutions to turn the fish with regard to abdomen/back. The fish must have been singularized in advance. US 5,291,983 discloses another system for orienting fish head/tail fin, which uses photocells, and which thereafter sends the fish in different runs depending on orientation. This system does also disclose a system for singularizing the fish. There are several different systems for automatic turning of fish where the tail fin is guided into a groove/slit/recess or similar whereupon the fish is tilted around. An example of such a solution is given in US 4,557,020. The system assumes that the fish has been singularized in advance, and has limited capacity because of the design. The risk of harming the fish is also very high, since the fish is to be tilted in the air while it is held in the tail. There is also a system for orienting fish which is capable to swim, such as disclosed in US 4,051,952.

However, a substantial disadvantage of systems in prior art is that the fish must be of a given size. The systems will not work with substantially smaller or larger fish, so that the fish must be sorted by size, prior to singularizing and/or turning.

DE 10 2007 041167 A1 describes a turning device for turning products, in particular fish fillets, comprising a rotating turning drum and additional rolls. However, the device is not applicable as is to conduct head/tail fin turning of intact fish.

### Object

The main object of the present invention is to provide a device that can be used for automatic orienting whole/disabled fish, so that the direction of the head/tail fin becomes equal when the fish passes through the device. When needed, another object of the invention is to orient the fish with regard to abdomen/back, and that it should be flexible with regard to the direction. The invention should operate with high speed and not harm the fish. Moreover, it is an object that the invention operates independent of the size of the fish, so that there will be no need for sorting in advance. The invention can be a part of a supply system for further processing, such as vaccination, slaughtering, sorting with regard to quality and/or size, biomass measurements, sex determination, marking and similar.

### The invention

The object is achieved by the use of a device according to claim 1. Further advantageous features appear from the accompanying dependent claims.

The use of a device according to the invention provides a uniform head/tail fin orientation of fish in a flow having random head/tail fin orientation, when the flow is supplied to the device. The device comprises a roll arranged transverse to the fish flow. The roll, in the following referred to as a turning roll, rotates with the flow and has a speed which at least corresponds to the velocity of the flow of fish being supplied. The roll can also constitute a part of a conveyor belt, such as the transversal end of a longer conveyor belt where the belt is attached around a roll, so that the part of the conveyor belt which performs the turning operation exhibits an approximately circular peripheral edge. The term "roll" or "turning roll" is in the following to be interpreted to comprise both a roll but also designs where the roll is covered by e.g. a conveyor belt. The roll surface has a smooth, plain pulley shape without openings, slits or similar which can accommodate the whole or parts of the fish. The term "pulley shape" is here meant to include both a surface without grooves, having a uniform smooth surface, and any form of grooves formed axially in the roll surface, such as a concave groove or a centered V-groove.

The fish supplied to the turning roll must have been disabled, such as anaesthetized or dead, but before rigor mortis. The fish should at least partly, be singularized in before being supplied to the turning roll, i.e. the fish should preferably not touch each other and it must be oriented lengthwise. The turning roll can be wide so that several fishes can pass at the same time side by side. The fish should be supplied with a minimum of water, but it should be wet.

Downstream of the turning roll, a receiving system is arranged to receive fish leaving the turning roll. This can have any design which will be obvious to a person skilled in the art, but must be designed to preserve the fish and avoid injuries during the turning operation. The term "injury" is meant to include both damage to the meat itself but also other life-weakening injuries, since the fish can be anaesthetized and is supposed to continue living after the treatment. Moreover, the system shall receive the fish in such a way that turning is not disturbed and that the head/tail fin orientation is preserved after turning.

To ensure that the fish is turned correctly, the fish is either supplied on top of the turning roll, or preferably before the top so that the fish follows the surface of the turning roll above the top. To avoid interfering with the turning, the receiving system shall be arranged with its uppermost end close to the turning roll, preferably between horizontal and vertical position, opposite the fish supply. In other words, the receiving system shall be retracted under the roll. In a preferred embodiment of the present invention, the receiving system is formed as an arched groove or gutter, preferably formed like a ski jump where the uppermost part is substantially vertical and the lower part is substantially horizontal. The receiving system will collect the fish after it has left the turning roll without changing its orientation.

Different devices suitable for the following treatment, may be arranged downstream of the receiving system. Even though the fish has been singularized at least partly before it is supplied to the turning roll, larger fish can obtain higher speed in the receiving system and thereby creating a need for new singularizing or stretching of the fish mass after turning. This may for example be solved by guiding the fish into an acceleration or retardation belt after the receiving system, and optionally into a device for singularization.

When fish which is to be turned touches the turning roll, fish entering with the tail fin first will lay towards the surface of the turning roll beyond a horizontal center line of the turning roll, and be turned when it leaves the surface so that the head enters first into the receiving system. However, fish arriving with the head first leaves the surface of the turning roll before the center line and is not turned. Accordingly, all fish have their head first when they leave the turning roll. This can be explained by the fact the shape and area of the tail fin provides a suction effect which holds the fish onto the turning roll for a longer period of time than the suction effect obtained between the fish head and turning roll. There is no artificial suction but a natural capillary suction. In some cases, for fish to be slaughtered, a machine-created suction can be used to keep the tail fin for a sufficient period of time. This is because the tail fin is smaller than the fish body and because the fish, as such, is heavier. However, it is a premise that the fish has not entered rigor mortis and that is does not exhibit any substantial bending resistance. In the case where a machine-created suction is used, the turning roll is provided with small holes to direct the suction to the roll surface.

In a particularly preferred embodiment, several different units are arranged in series, and provide a fast and reliable singularization and orientation of the fish. A batch of fish having a random orientation is supplied to the system upstream of a singularization device. Downstream of the singularization device, a device for orienting head/tail fin is arranged, which automatically turns fish lying in a certain direction, so that the fish is oriented uniformly after the turning operation. In a device for head/tail fin orientation as described above, fish in the receiving system will obtain a speed determined by the fish weight, and to prevent larger fish from touching smaller fish in the receiving system, fish is transferred to a retardation or acceleration system immediately after the receiving system so that each fish obtains identical speed. Then the fish is transferred to another singularization device for further singularization, and if desired the fish can be transferred to a system for abdomen/back turning. When fish leaves this system, it has been singularized and has a uniform head/tail fin orientation and optionally a given abdomen/back orientation.

In a method for singularizing, a batch of fish having a random orientation is guided into a device which performs length orientation of each fish, and stretches the batch and then transport the fish in a given direction with a simultaneous singularization. In a particularly preferred embodiment of the method, the device comprises a roll pair rotating in opposite senses with adjacent surfaces each moving upwards.

In another method according to the present invention, an at least partly singularized amount of fish is oriented with regard to head/tail fin. Fish having a random head/tail fin orientation is guided into a device for head/tail fin turning, where only fish having a given orientation is being turned, and fish having opposite orientation is not being turned. Thus, all fish leaving the device for head/tail fin orientation will have the same orientation. In a particularly preferred embodiment of the method, the head/tail fin device comprises a turning roll having a smooth and plain pulley shape.

### Example

The present invention is in the following described with reference to the accompanying figures, showing a preferred embodiment of the invention, where:
Figure 1 shows the device for head/tail fin turning,
Figure 2 and 3 are pictures of the device turning the fish.

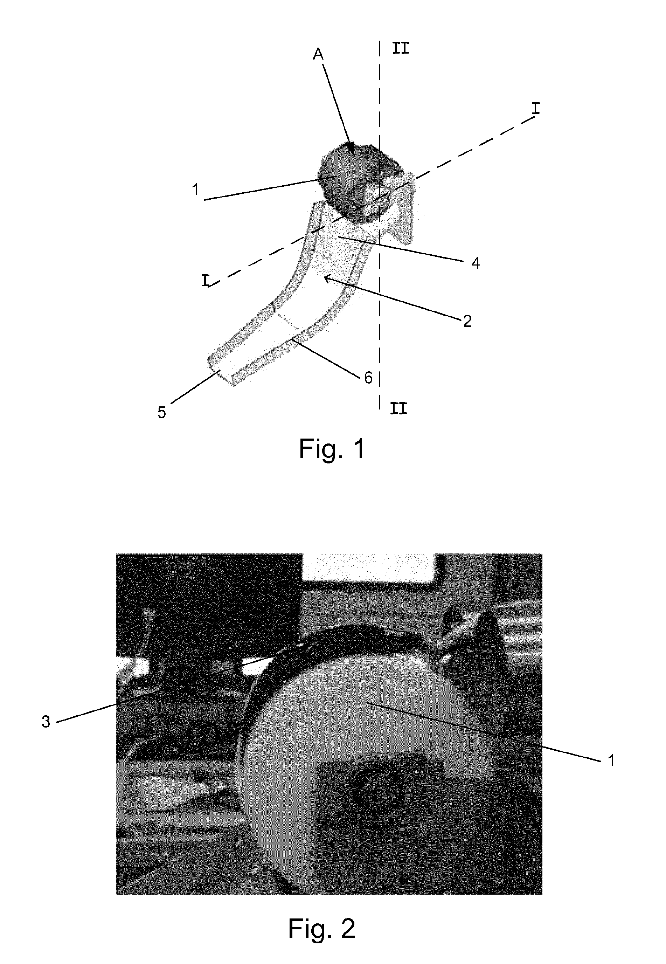

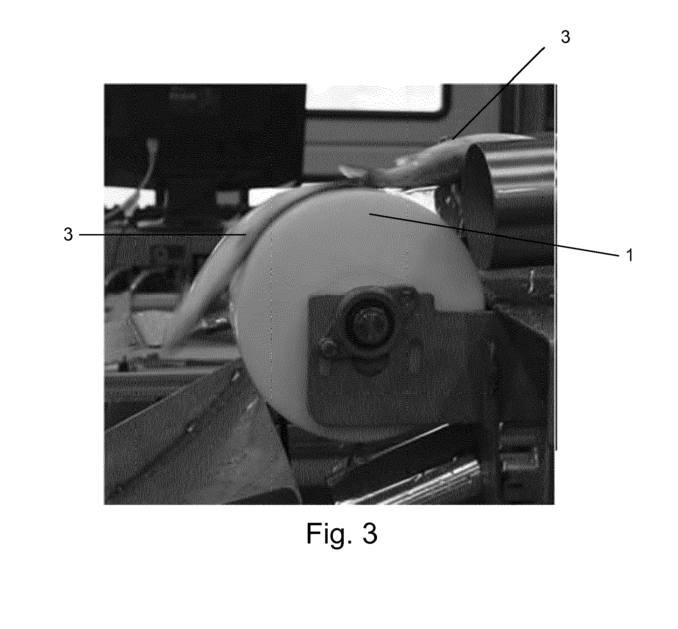

In Figure 1, a device for head/tail fin turning is showed, comprising a roll 1 which rotates in the flow direction, and a receiving system 2 which is retracted under the roll 1. Fish is supplied to the roll 1 before or at the uppermost point A. In Figure 2 it is shown that a fish 3 which arrives with the tail fin first, will follow the roll 1 almost 180 degrees, and when it leaves it will turn to arrive with the head first down into the receiving system 2 downstream of the roll. Figure 3 shows a case where a fish 3 arrives with the head first, and as seen from the figure, it will leave the roll 1 already after about 90 degrees and is therefore not turned, so that also this fish will arrive with its head first into the receiving system 2.

The receiving system 2 for fish which has passed the turning roll is placed immediately adjacent to the turning roll 1, between a horizontal I-I and vertical II-II center line. The receiving system 2 is formed as a gutter where the upstream end 4 is substantially vertical, and the downstream end 5 is substantially horizontal. This design protects the fish in a best possible manner, as it reduces/controls the way the fish fall from the roll 1 thus preventing the fish from being struck or hit which can cause damages or injuries.

The gutter has vertical side walls 6 and is tapering to simplify the transfer to a following conveyor belt which brings the fish onto further treatment, such as vaccination. Moreover, an accelerator conveyor creating further mutual distance between the fish can be provided, if desirable.

The description above has shown and described a preferred embodiment of the present invention. The figures and the example are only provided to illustrate an embodiment of the invention, and should by no means be interpreted as limiting to the scope of the invention as defined in the following patent claims.

## Claims

1. Use of a device comprising a roll (1) which rotates with a flow of fish (3) which is guided onto the roll prior to or at an uppermost point (A), and a receiving system (2) located downstream of the roll, whereby the roll (1) has a smooth, plain pulley form and that the receiving system (2) is retracted under the roll, for automatic head/tail fin orienting of disabled whole fish from a flow having random head/tail fin orientation to obtain a flow having a uniform orientation.

2. The use according to claim 1, wherein the roll (1) is a part of a conveyor belt, where the band (13) turns around the roll (1).

3. The use according to claim 1 or 2, wherein the roll has a speed which at least corresponds to the speed of the flow of fish being supplied.

4. The use according to any one of claims 1 to 3, wherein the receiving system (2) is formed as an inclined gutter, preferably having a form like a ski jump where the uppermost part (4) is substantially vertical and the lowermost part (5) is substantially horizontal.

## Patentansprüche

1. Verwendung einer Vorrichtung, die eine Rolle (1), die einen Strom von Fischen (3) dreht, der vor oder an einem höchsten Punkt (A) der Rolle zugeführt wird, und ein stromabwärts der Rolle positioniertes Aufnahmesystem (2) umfasst, wobei die Rolle (1) die Form einer weichen, ebenen Riemenscheibe hat und das Aufnahmesystem (2) unter der Rolle eingezogen ist, zur automatischen Kopf/Schwanzflossen-Ausrichtung von bewegungsunfähig gemachten ganzen Fischen aus einem Strom mit willkürlicher Kopf/Schwanzflossen-Ausrichtung zum Erhalt eines Stroms mit einer gleichförmigen Ausrichtung.

2. Verwendung nach Anspruch 1, wobei die Rolle (1) ein Teil eines Förderbands ist, wobei sich das Band (13) um die Rolle (1) dreht.

3. Verwendung nach Anspruch 1 oder 2, wobei die Rolle eine Geschwindigkeit aufweist, die der Geschwindigkeit des zugeführten Stroms von Fischen mindestens entspricht.

4. Verwendung nach einem der Ansprüche 1 bis 3, wobei das Aufnahmesystem (2) als eine geneigte Rinne, vorzugsweise in Form einer Skisprungschanze, bei der der oberste Teil (4) im Wesentlichen vertikal ist und der unterste Teil (5) im Wesentlichen horizontal ist, ausgebildet ist.

## Revendications

1. Utilisation d'un dispositif comprenant un rouleau (1) qui tourne avec un flux de poissons (3) qui est guidé sur le rouleau avant ou au niveau d'un point le plus haut (A), et un système de réception (2) situé en aval du rouleau, moyennant quoi le rouleau (1) a la forme d'une poulie simple et lisse et le système de réception (2) est rétracté sous le rouleau, pour l'orientation tête/nageoire caudale automatique du poisson entier inanimé à partir d'un flux ayant une orientation tête/nageoire caudale aléatoire pour obtenir un flux ayant une orientation uniforme.

2. Utilisation selon la revendication 1, dans laquelle le rouleau (1) est une partie d'une courroie de convoyeur, où la bande (13) tourne autour du rouleau (1).

3. Utilisation selon la revendication 1 ou 2, dans laquelle le rouleau a une vitesse qui correspond au moins à la vitesse du flux de poisson en train d'être délivré.

4. Utilisation selon l'une quelconque des revendications 1 à 3, dans laquelle le système de réception (2) est formé en tant que gouttière inclinée, ayant de préférence une forme similaire à un tremplin de ski où la partie la plus haute (4) est sensiblement verticale et la partie la plus basse (5) est sensiblement horizontale.
